Europäisches Patentamt

European Patent Office

Office européen des brevets

(11) Veröffentlichungsnummer: **0 253 969**
**A1**

(12) **EUROPÄISCHE PATENTANMELDUNG**

(21) Anmeldenummer: 87106501.7

(22) Anmeldetag: 05.05.87

(51) Int. Cl.⁴: **B63B 35/44**

(30) Priorität: 08.07.86 DE 3622941

(43) Veröffentlichungstag der Anmeldung:
27.01.88 Patentblatt 88/04

(84) Benannte Vertragsstaaten:
DE ES FR GR IT

(71) Anmelder: **Tax, Hans**
**Potsdamer Strasse 3**
**D-8000 München 40(DE)**

(72) Erfinder: **Tax, Hans**
**Potsdamer Strasse 3**
**D-8000 München 40(DE)**

(74) Vertreter: **Weickmann, Heinrich, Dipl.-Ing. et al**
**Patentanwälte Dipl.-Ing. H.Weickmann**
**Dipl.-Phys.Dr. K.Fincke Dipl.-Ing.**
**F.A.Weickmann Dipl.-Chem. B. Huber Dr.-Ing.**
**H. Liska Dipl.-Phys.Dr. J. Prechtel Postfach**
**860820**
**D-8000 München 86(DE)**

(54) **Festlandverankerter, gebäudetragender Schwimmkörper.**

(57) Auf einem Schwimmkörper (110) im küstennahen Wasserbereich ist ein Hotelgebäude errichtet. Der Schwimmkörper (110) ist durch Verankerungsseile (18) mit einem Drehblock (20) verbunden. Der Drehblock ist drehbar um eine vertikale Achse (26) an einem Verankerungsblock (22) gelagert, der am Seegrund fundamentiert ist. Versorgungsleitungen und Entsorgungsleitungen (28) führen vom Festland zu dem Verankerungsblock (22) und über Drehverbindungen zwischen Verankerungsblock und Drehblock (20) zu dem Schwimmkörper (110). Gegebenenfalls kann eine Brücke (36) vom Festland zu dem Schwimmkörper führen. Diese Brücke liegt zur Berücksichtigung der Drehbewegung des Schwimmkörpers auf einer schwimmkörperseitigen Laufbahn (40) auf, die dem Rand des Schwimmkörpers folgt und um die Drehachse herumläuft.

Fig.2

## Festlandverankerter, gebäudetragender Schwimmkörper

Die Erfindung betrifft einen festlandverankerten, gebäudetragenden Schwimmkörper mit Leitungen (Versorgungs und/oder Entsorgungsleitungen) zum Festland.

Es ist bekannt, Schiffe in Hafenanlagen zu verankern und über Versorgungsleitungen und Entsorgungsleitungen an festlandseitige Versorgungs-und Entsorgungsnetze anzuschließen. Es ist auch bekannt, auf solchen festlandverankerten Schiffen Restaurants, Vergnügungsstätten, Hotels und dergleichen zu betreiben.

Bisher hat man in der Regel ältere, für den Transportdienst nicht mehr taugliche Schiffe für solche Zwecke eingesetzt. Die Verankerung erfolgte in der Regel durch eine Vertäuung am Festland oberhalb der Wasseroberfläche. Die Versorgungs-und Entsorgungsleitungen wurden als Schläuche ausgeführt, die über dem Wasserspiegel oder kurz darunter vom festlandseitigen Versorgungs-bzw. Entsorgungsnetz zu seitlich am jeweiligen Schiff angebrachten Anschlüssen führten.

Aus der DE AS 26 29 787 ist ein festlandverankerter, gebäudetragender Schwimmkörper bekannt, zu dessen Verankerung ein Verankerungsseil vorgesehen ist, welches annähernd vom Zentrum des Schwimmkörperbodens senkrecht zum Seeboden nach unten verläuft. Dabei ist ein Drehantrieb vorgesehen, um dem Schwimmkörper eine Drehbewegung um die Achse des Verankerungsseiles zu erteilen. Das Problem der Verlegung von Versorgungs-und Entsorgungsleitungen ist in dieser Druckschrift nicht behandelt. Außerdem gewährleistet die Art der Verankerung über ein zentrales Verankerungsseil keine hinreichende Aufnahme der beträchtlichen horizontalen Kräfte durch Wind und Wellen.

Demgegenüber wird erfindungsgemäß vorgeschlagen, daß ein schwimmkörperseitiger, zentraler Drehblock annähernd im Zentrum des Schwimmkörpergrundrisses vorgesehen ist, welcher Drehblock an einem auf dem Seeboden verankerten Verankerungsblock um eine vertikale Drehachse drehbar gelagert ist, daß festlandseitige Leitungsabschnitte vom Festland zu dem Verankerungsblock führen, daß zwischen dem Drehblock und dem Verankerungsblock Drehverbindungen zwischen schwimmkörperseitigen und festlandseitigen Leitungsabschnitten vorgesehen sind, und daß für den Schwimmkörper ein Drehantrieb vorgesehen ist.

Mit der erfindungsgemäßen Lösung wird es möglich, in Küstennähe in Gebieten, in denen Baugrundstücke mit nahem Zugang zum Strand knapp und teuer sind, Bauten insbesondere für Hotel-und Sanatoriumszwecke zu errichten, die vollständig vom Wasser umgeben sind, und diese Bauten bei Bedarf oder ständig in Rotation um eine vertikale Achse zu versetzen, so daß von sämtlichen Außenfenstern des Gebäudes aus nacheinander Seeblick, Landblick und Küstenblick möglich ist und alle Fenster nacheinander der Sonneneinstrahlung zugänglich werden. Gleichwohl ist es möglich, das Gebäude und die Hilfseinrichtungen des Schwimmkörpers vom Festland aus zu versorgen und zu entsorgen, insbesondere mit Frischwasser, Abwasser, elektrischem Strom, flüssigem und gasförmigem Heizmaterial usw. Weiter ist durch die erfindungsgemäße Lösung das Problem der Verfrachtung des Schwimmkörpers unter Einwirkung horizontaler Kräfte gelöst.

Der Drehantrieb kann zwischen dem Verankerungsblock und dem Drehblock angeordnet sein. In diesem Falle ist es notwendig, den Drehblock relativ torsionsfest mit dem Schwimmkörper zu verbinden, was beispielsweise durch entsprechend gekreuzte Verankerungsseile oder Verankerungsgestänge zwischen dem Drehblock und dem Schwimmkörper erfolgen kann. Der Drehantrieb kann in diesem Fall etwa im Prinzip so ausgebildet werden wie der Drehantrieb zwischen dem Oberteil und dem Unterteil eines Krandrehgestells.

Nach einer anderen Ausführungsform ist vorgesehen, daß der Drehantrieb von einer Wasservortriebseinheit, insbesondere einer mit ihrer Wirkrichtung tangential in Bezug auf die Drehachse des Schwimmkörpers am Schwimmkörper angeordneten Schiffsschraube oder Rückstoßdüse gebildet ist. In diesem Fall genügt eine relativ kleine Wasservortriebseinheit, da die Drehzahl des Schwimmkörpers in der Regel sehr gering sein wird, etwa eins bis zehn Umdrehungen pro Tag. Man kann deshalb Wasservortriebseinheiten verwenden, wie sie zum Antrieb von leichten Schiffe Verwendung finden. Bevorzugt wird man die Wasservortriebseinheit in größmöglichem Abstand von der Drehachse des Schwimmkörpers anordnen, so daß sie mit einem möglichst großen Hebelarm an dem Schwimmkörper ein Drehmoment aufbringt.

Den Personen-und Güterverkehr zwischen dem Schwimmkörper bzw. dem darauf errichteten Gebäude und dem Festland kann man entweder über Zubringerboote und Hubschrauber besorgen oder vorzugsweise über eine Landebrücke, welche festlandseitig ortsfest gelagert ist und - schwimmkörperseitig auf einer dem Außenumfang des Schwimmkörpergrundrisses nahen Laufbahn um die Drehachse aufliegt. Ist die Laufbahn längs einem Kreisbogen um die Drehachse des Schwimmkörpers verlegbar und ist nicht mit allzu großen Niveauänderungen durch Ebbe und Flut zu rechnen, so genügt eine Landebrücke von konstanter Länge. Andernfalls, d.h. bei unrunder Laufbahn um die Drehachse des Schwimmkörpers und bei erheblichen Niveauunterschieden durch Ebbe und Flut wird man die Landebrücke teleskopierbar ausführen.

Der Drehantrieb kann frei steuerbar sein oder auch durch ein Zeitprogrammwerk programmierbar sein.

Durch das Drehen des Gebäudes wird es möglich, alle Räume innerhalb des Gebäudes im wesentlichen gleichwertig im Hinblick auf die dem Bewohner der einzelnen Zimmer dargebotene Aussicht und den Sonneneinfall auszuführen, unabhängig davon, an welcher Gebäudeseite - in einem gebäudefesten Koordinatensystem betrachtet - die Fenster des jeweiligen Zimmers liegen. Dies führt nicht nur zu einer hohen Wirtschaftlichkeit eines etwa als Hotel oder Santoriums betriebenen Gebäudes, sondern auch dazu, daß mit sämtlichen Zimmern ein annähernd gleich zahlungskräftiger Kundenkreis angesprochen werden kann. Dies führt zu einem soziologisch weitgehend einheitlichen Aufbau der Bewohnerschaft eines solchen Gebäudes, was für den Betrieb eines Hotels oder eines Sanatoriums erwünscht ist.

Das Gebäude wird man bevorzugt so ausbilden, daß eine möglichst große Zahl von Räumen mit Außenfenstern entsteht, also beispielsweise mit sternförmigem, insbesondere Y-förmigem Grundriß oder mit rundem oder polygonalem Grundriß, insbesondere mit Innenhof, wobei dann im Bereich des Innehofs diejenigen Betriebsräume untergebracht werden können, von denen aus weder eine besondere Aussicht noch ein Sonneneinfall erwartet wird.

Der Verankerungsblock kann entweder fest in den Seeboden eingebaut sein oder seinerseits wieder über zusätzliche Verankerungsmittel mit Verankerungsstellen am Seeboden verbunden sein. Die Versorgungs-und Entsorgungsleitungen können vom Drehblock aus frei oder entlang den Schwimmkörper mit dem Drehblock verbindenden Verankerungsmitteln geführt sein. Die festlandseitigen Leitungsabschnitte können am Seeboden verlegt sein oder frei durch das Wasser verlaufen.

Nach einer bevorzugten Ausführungsform ist der Verankerungsblock als Verankerungssäule ausgebildet und der Drehblock so ausgebildet, daß er die Verankerungssäule umschließt. Die Verankerungssäule kann beispielsweise als Betonhohlsäule ausgebildet sein, welche im Seeboden fundamentiert ist. Bei einer solchen Ausführungsform ist die Aufnahme der horizontalen Krafteinwirkungen sichergestellt.

Der Drehblock kann dabei auf der Verankerungssäule höhenverstellbar geführt sein. Dies führt dazu, daß zwischen den festlandseitigen Leitungsabschnitten und den schwimmkörperseitigen Leitungsabschnitten Teleskop-Drehverbindungen erforderlich werden. Durch die Höhenverstellbarkeit des Drehblocks längs der Verankerungssäule wird den periodischen Schwankungen der Wasserlinie durch Ebbe und Flut sowie durch Wellenbewegungen Rechnung getragen.

Um eine möglichst stabile Verbindung des Drehblocks mit dem Schwimmkörper zu gewährleisten, führt man den Drehblock bevorzugt als Hohlsäule innerhalb des Schwimmkörpers aus.

Um dem Bewohner des Gebäudes auf dem Schwimmkörper den Eindruck zu vermitteln, Passagier eines Schiffes zu sein, wird vorgeschlagen, daß der Drehblock auf der Verankerungssäule taumelnd gelagert ist. Eine solche taumelnde Lagerung kann etwa dadurch gewonnen werden, daß der Drehblock auf der Verankerungssäule mittels mindestens zweier Kränze von elastischen Lagerkörpern gelagert ist. Diese Lagerkörper können entweder als elastische Kugeln oder Rollen etwa in Form von Luftreifen ausgebildet sein. Die Elastizitätsverhältnisse der taumelnden Lagerung werden dabei so gewählt, daß die Taumelfrequenz des Schwimmkörpers, die sich aus der Eigenfrequenz und der Anregungsfrequenz durch die Wellenbewegung ergibt, das Gefühl des Aufenthaltes auf einem Schiff vermittelt. Wenn auch bei ruhiger See das Gefühl einer Schiffsbewegung vermittelt werden soll, so kann der Schwimmkörper durch entsprechende Schwingungsantriebe zu einer Taumelbewegung angeregt werden.

Für den Fall einer in unerwünschtem Ausmaß unruhigen See und für den Fall einer Gefährdung der Schwimmfähigkeit des Schwimmkörpers, etwa durch terroritstischen Eingriff, ist vorgesehen, daß in kreisförmiger Anordnung um die Drehachse auf dem Seeboden eine Auflagerung für den Schwimmkörper errichtet wird, welche den Schwimmkörper bei Absenkung noch in betriebsfähiger Stellung trägt. Betriebsfähig soll dabei bedeuten, daß ein auf dem Schwimmkörper errichtetes Gebäude oder Hotel nach wie vor uneingeschränkt bewohnbar ist. In diesem Falle ist dann lediglich die Drehfähigkeit des Schwimmkörpers für diesen Zeitraum unterbunden. Die seebodenseitige Auflagerung und die Auflagerbereiche im Schwimmkörper können dabei so kräftig ausgebildet sein, daß sie das gesamte Eigengewicht des Schwimmkörpers und des darauf errichteten Gebäudes einschließlich Nutzlast aufnehmen können, wenn durch vollständige Flutung des Schwimmkörpers dessen Auftrieb im wesentlichen unwirksam wird.

Um etwa bei Aufkommen unruhiger See oder großen Sturms den Schwimmkörper von der Seebewegung entkoppeln zu können, ist vorgesehen, daß der Schwimmkörper mit Flutkammern ausgerüstet ist, welche ein Aufsetzen des Schwimmkörpers auf die Auflagerung gestatten.

Die Auflagerung kann in Form von kreisförmig verteilten Auflagerstützen oder in Form eines geschlossenen Auflagerringes ausgebildet sein. In beiden Fällen ist es möglich, die Auflagerung über einer Bodenplatte auszubilden, welche ein Fundament für die Verankerungssäule bildet.

Der Schwimmkörper kann in einer die Drehhachse enthaltenden, vertikalen Schnittebene betrachtet ein in Höhe der Wasserlinie eingezogenes Profil besitzen. Durch ein solches Profil wird zweierlei erreicht:
Zum einen wird die Angriffswirkung der Wellen bei starkem Seegang verringert, so daß es nicht zu einem unerwünscht starken Schwanken des Schwimmkörpers kommen kann und die Seitenkräfte auf den Schwimmkörper verringert werden. Zum anderen wird ein Hochspritzen der auflaufenden Brandung auf das Deck verhindert.

Die beiliegenden Figuren erläutern die Erfindung anhand von Ausführungsbeispielen. Es stellen dar:

   Fig. 1 eine Draufsicht auf einen gebäudetragenden Schwimmkörper in Küstennähe;

   Fig. 2 eine Seitenansicht des Schwimmkörpers in Pfeilrichtung II der Fig. 1;

   Fig. 3 den Verankerungsblock und den Drehblock in Vergrößerung;

   Fig. 4a verschiedene Grundrißformen von auf dem bis 4h Schwimmkörper zu errichtenden Gebäuden;

   Fig. 5 eine weitere Ausführungsform eines gebäudetragenden Schwimmkörpers und

   Fig. 6 eine Draufsicht auf eine seebodenseitige Auflagerung für den Schwimmkörper nach Figur 5.

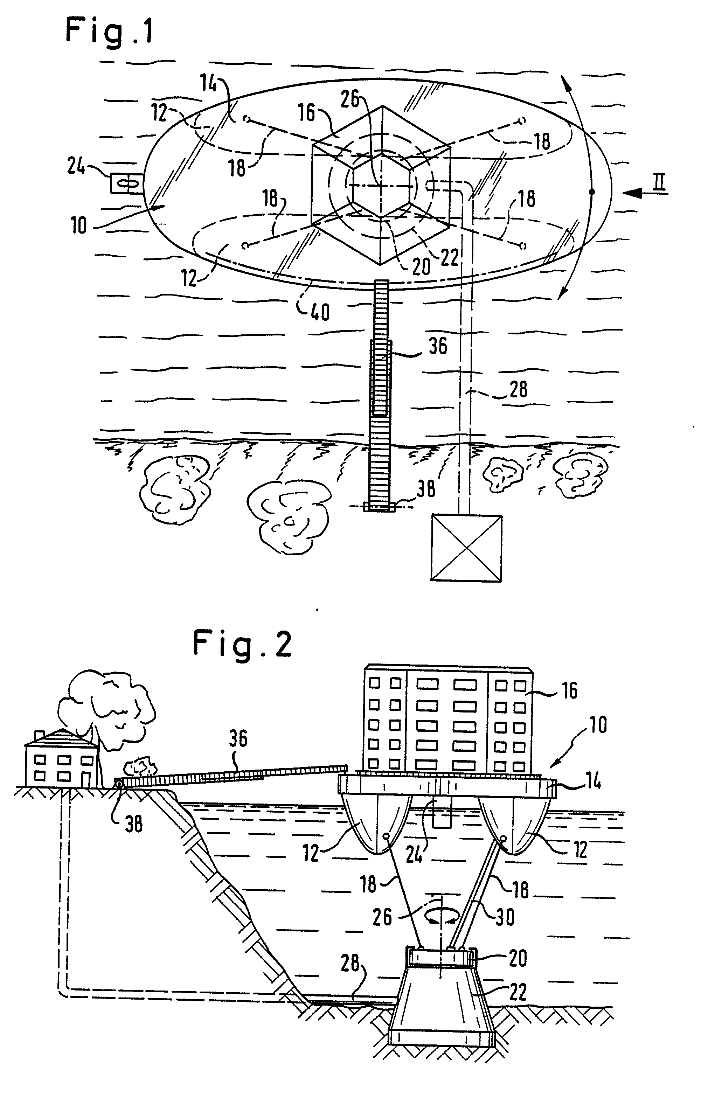

In Fig. 1 ist der Schwimmkörper ganz allgemein mit 10 bezeichnet. Es handelt sich um einen Doppelrumpfschwimmkörper mit zwei Rümpfen 12 und einer Plattform 14. Auf der Plattform 14 ist ein Gebäude 16 errichtet, im Beispielsfall ein Gebäude mit sechseckigem Außen grundriß und zentralem Innenhof.

Weitere Betriebsräume können sich innerhalb der Plattform und innerhalb der Rümpfe 12 befinden.

Der Schwimmkörper 10 ist durch Verankerungsseile 18 mit einem Drehblock 20 verbunden. Die Verankerungsseile 18 divergieren von dem Drehblock 20 zu den Rümpfen 12 hin. Dabei können die Verankerungsseile 18 so kreuzweise verlegt sein, daß eine gewisse torsionsfeste Verbindung zwischen den Rümpfen 12 und dem Drehblock 20 besteht. Wird eine hohe Torsionsfestigkeit der Verbindung zwischen den Rümpfen 12 und dem Verankerrungsseil 18 erwünscht, so kann man dies durch sich kreuzende Seile in mehreren Ebenen erreichen.

Alternativ ist es auch möglich, die Verankerungsseile durch Verankerungsstäbe zu ersetzen.

Der Drehblock 20 ist auf einem in Seegrund fundamentierten Verankerungsblock 22 drehbar gelagert. An dem Schwimmkörper 10 ist mindestens eine Wasservortriebseinheit 24 angebracht, und zwar an einer Stelle maximalen Abstands von der Drehachse 26. Diese Vortriebseinheit 24, im Beispielsfall ein Propeller mit bezogen auf die Drehachse 26 tangentialer Wirkrichtung, erteilt dem Schwimmkörper 10 ein Drehmoment um die Drehachse 26, so daß der Schwimmkörper um die Drehachse 26 langsam rotiert. Alternativ ist es auch möglich, den Drehantrieb zwischen dem Verankerungsblock 22 und dem Drehblock 20 anzuordnen.

Ein Bündel 28 von Versorgungsleitungen und Entsorgungs leitungen führt vom Festland (Fig. 2) zu dem Verankerungsblock 22. Es handelt sich hierbei um die festlandseitigen Leitungsabschnitte, beispielsweise einer Wasserversorgungsleitung, einer Abwasserentsorgungsleitung und einer elektrischen Energiezuführungsleitung.

Ein Bündel von schwimmkörperseitigen Leitungsabschnitten der gleichen Leitungen ist mit 30 bezeichnet und führt von dem Drehblock 20 zu dem Schwimmkörper 10 bzw. zu dem Gebäude 16.

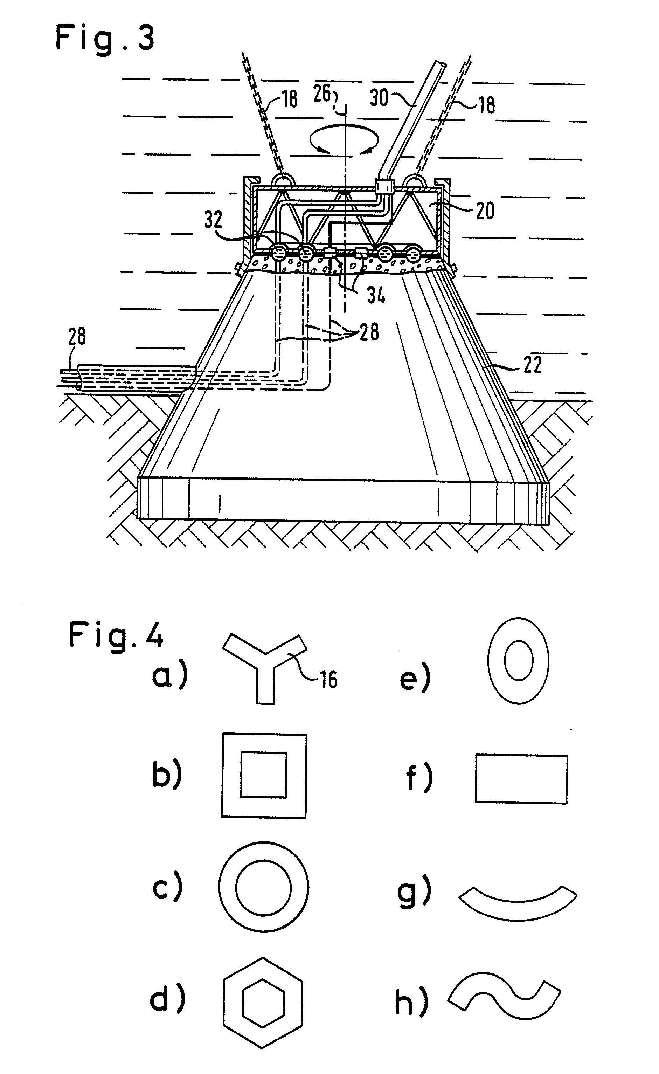

Wie in Fig. 3 dargestellt, sind die festlandseitigen Leitungsabschnitte 28 und die schwimmkörperseitigen Leitungsabschnitte 30 an der Grenzfläche zwischen dem Verankerungsblock 22 und dem Drehblock 20 durch Ringkanäle um die Drehachse 26 bzw. Schleifringverbindungen um die Drehachse 26 miteinander verbunden. Die Ringkanäle sind dabei mit 32 bezeichnet und die Schleifkontakte mit 34.

Die Wasservortriebseinheit 24 ist von einem Bedienungsmann oder durch eine Programmiereinheit gesteuert. Im Beispielsfall sei angenommen, daß sich - durch eine Programmiereinheit gesteuert - der Schwimmkörper im Laufe eines Tages von 24 Stunden viermal um seine Achse dreht. Dies bedeutet, daß man von jedem Zimmer aus im Laufe eines Sonnentages von beispielsweise 12 Stunden von jedem Fenster aus zweimal jede Aussicht erfahren kann, die der Standort des Gebäudes bietet. Entsprechend erlebt man von jedem Fenster aus im Laufe eines Sonnentages von 12 Stunden abwechselnd Sonneneinstrahlung und Schatten.

Wie aus Fig. 2 ersichtlich, läuft von dem Festland eine Teleskopbrücke 36 zu der Plattform 14 des Schwimmkörpers 10. Diese Teleskopbrücke 36 ist am Festland um eine horizontale Achse 38 -

schwenkbar gelagert und liegt mit ihrem - schwimmkörperseitigen Ende auf einer Laufbahn 40 mit Rädern auf, wobei die Laufbahn dem äußeren Umriß der Plattform 14 annähernd folgt. Die nicht eingezeichneten Laufräder können in der Laufbahn so geführt sein, daß die Brücke zwangsläufig aus-und einteleskopiert wird, je nachdem, wie groß der Abstand der Laufbahn 40 von der Schwenkachse 38 ist.

In den Fig. 4a bis 4h erkennt man verschiedene Grundrißformen für das Gebäude 16.

Es ist nicht notwendig, den Schwimmkörper - von der Vortriebseinheit 24 abgesehen - mit einem eigenen Antrieb auszurüsten. Der Schwimmkörper kann vielmehr durch ein Schleppfahrzeug an die jeweilige Verankerungsstelle geschleppt und danach dort verankert werden.

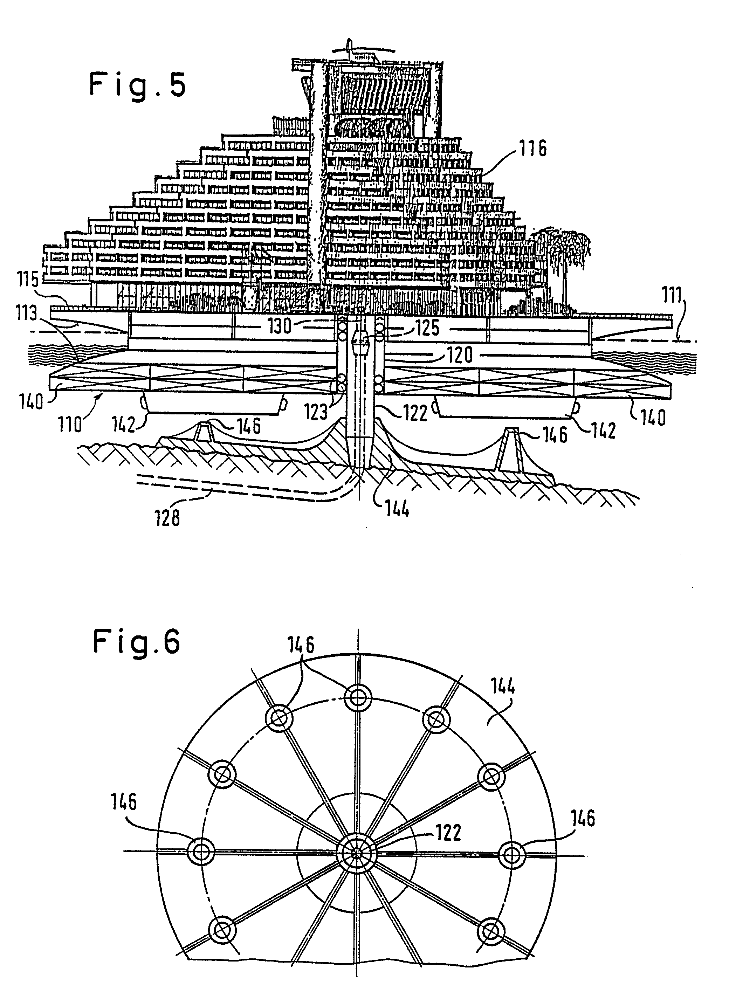

In Fig. 5 ist ein Schwimmkörper mit 110 bezeichnet. Der Schwimmkörper hat im wesentlichen kreisrunden Umriß und trägt ein terassenförmig nach oben verjüngtes Gebäude 116. Die Wasserlinie ist mit 111 bezeichnet. Man erkennt, daß die Außenumfangswand des Schwimmkörpers 110 auf der Höhe der Wasserlinie 111 ein eingezogenes Profil 113 besitzt. Dieses eingezogene Profil 113 bricht die Wellen, verringert den Wellenwiderstand an dem Schwimmkörper und verhindert, daß die auflaufende Brandung über das Deck 115 spritzt.

Im Zentrum des Schwimmkörpers 110 ist eine Hohlsäule 120 gebildet, welche die Funktion des - schwimmkörperseitigen Drehblocks aufnimmt. Diese Drehsäule ist auf einer Verankerungssäule 122 drehbar und höhenverstellbar geführt, wobei die Verankerungssäule 122 die Funktion des Verankerungsblocks übernimmt. Zur drehbaren und höhenverstellbaren Lagerung der Drehsäule 120 auf der Verankerungssäule 122 sind zwischen beiden mehrere Kränze von elastischen Lagerkörpern 123 angeordnet. Im Zentrum der Verankerungssäule 122 erkennt man eine Teleskop-Drehverbindung 125 zwischen festlandseitigen Leitungsabschnitten 128 und - schwimmkörperseitigen Leitungsabschnitten 130.

Der Schwimmkörper 110 ist mit einer Mehrzahl von Flutkammern 140 ausgeführt, welchen die Höheneinstellung des Schwimmkörpers 110 gegenüber der Wasserlinie 111 gestatten.

An der Unterseite des Schwimmkörpers 110 ist eine ringförmige Gondel 142 angebracht, welche für die Bewohner des Gebäudes submarine Räume mit Aussicht auf den Unterwasserbereich schafft.

Die Verankerungssäule 122 ist durch eine Fundamentplatte 144 gestützt. An dieser Fundamentplatte ist ein Auflagerring 146 ausgebildet. Bei starkem Seegang kann der Schwimmkörper 110 durch Fluten einer oder mehrerer Flutkammern 140 soweit abgesenkt werden, daß sich der Schwimmkörper 140 auf dem Auflagerring 146 setzt. Dann wird der Schwimmkörper mit dem Gebäude stationär und ist keiner Wellenbewegung mehr unterworfen. Sollte der Schwimmkörper, etwa durch terroristi sche Einwirkung, leck werden, so setzt er sich ebenfalls auf dem Auflagerring 146 ab. Im Beispielsfall ist der Auflagerring 146 von einer ringförmigen Anordnung von Einzelstützen gebildet, die sich über der Fundamentplatte 144 erheben (Fig. 6).

Der Drehantrieb für den Schwimmkörper kann genauso ausgebildet sein, wie unter Bezugnahme auf die Figuren 1 und 2 beschrieben. Es ist aber auch möglich, zwischen der Hohlsäule 120 und der Verankerungssäule 122 einen Drehantrieb vorzusehen.

Die Lagerkörper 123 sind von solchem Volumen und solcher Elastizität, daß sie eine Taumelbewegung des Schwimmkörpers 110 gegenüber der Verankerungssäule 122 nach Wunsch gestatten, also dann, wenn der Schwimmkörper nicht auf dem Auflagerring 146 aufgesetzt ist. Der Schwimmkörper führt dann eine Schlingerbewegung aus, die dem Bewohner des Gebäudes 116 das Gefühl vermittelt, sich auf einem Schiff aufzuhalten. Um eine solche Schlingerbewegung auch bei völlig ruhiger See künstlich erzeugen zu können, kann in Abstand von der Verankerungssäule 122 an dem Schwimmkörper eine periodisch wirkende Vertikalauftriebseinheit angebracht sein.

## Ansprüche

1. Festlandverankerter, gebäudetragender Schwimmkörper mit Leitungen (Versorgungs-und Entsorgungsleitungen) zum Festland, **dadurch gekennzeichnet,** daß ein schwimmkörperseitiger, zentraler Drehblock (20) annähernd im Zentrum des Schwimmkörpergrundrisses vorgesehen ist, welcher Drehblock (20) um eine vertikale Drehachse (26) an einem auf dem Seeboden verankerten Verankerungsblock (22) drehbar gelagert ist, daß festlandseitige Leitungsabschnitte (28) vom Festland zu dem Verankerungsblock (22) führen, daß im Bereich des Drehblocks (20) und des Verankerungsblocks (22) Drehverbindungen (32, 34) zwischen schwimmkörperseitigen Leitungsabschnitten (30) und den festlandseitigen Leitungsabschnitten (28) vorgesehen sind, und daß für den Schwimmkörper (10) ein Drehantrieb (24) vorgesehen ist.

2. Schwimmkörper nach Anspruch 1, **dadurch gekennzeichnet,** daß der Drehantrieb zwischen dem Verankerungsblock (22) und dem Drehblock (20) angeordnet ist.

3. Schwimmkörper nach Anspruch 1, **dadurch gekennzeichnet,** daß der Drehantrieb von einer Wasservortriebseinheit (24), insbesondere einer mit ihrer Wirkrichtung annähernd tangential in Bezug auf die Drehachse (26) angeordneten Schiffsschraube oder Rückstoßdüse gebildet ist.

4. Schwimmkörper nach einem der Ansprüche 1 bis 3, **dadurch gekennzeichnet,** daß der Schwimmkörper (10) mit dem Festland durch eine Brücke (36) verbunden ist, welche - schwimmkörperseitig auf einer nahe dem Umriß des Schwimmkörpers verlaufender Laufbahn (40) um die Drehachse aufliegt und gegebenenfalls teleskopierbar ausgeführt ist.

5. Schwimmkörper nach einem der Ansprüche 1 bis 4, **dadurch gekennzeichnet,** daß der Drehantrieb (24) frei steuerbar oder programmierbar ist.

6. Schwimmkörper nach Anspruch 5, **dadurch gekennzeichnet,** daß das Gebäude (16) einen sternförmigen Grundriß, insbesondere einen Y-förmigen Grundriß besitzt.

7. Schwimmkörper nach einem der Ansprüche 1 bis 5, **dadurch gekennzeichnet,** daß das Gebäude (16) einen runden oder polygonalen Grundriß, insbesondere mit Innenhof besitzt.

8. Schwimmkörper nach einem der Ansprüche 1 bis 7, **dadurch gekennzeichnet,** daß der Verankerungsblock als Verankerungssäule (122) ausgebildet ist und daß der Drehblock (120) die Verankerungssäule (122) umschließt.

9. Schwimmkörper nach Anspruch 8, **dadurch gekennzeichnet,** daß der Drehblock (122) auf der Verankerungssäule (120) höhenverstellbar geführt ist und daß zwischen den festlandseitigen Leitungsabschnitten (128) und den schwimmkörperseitigen Leitungsabschnitten (130) eine Teleskop Drehverbindung (125) vorgesehen ist.

10. Schwimmkörper nach Anspruch 8 oder 9, **dadurch gekennzeichnet,** daß der Drehblock (120) als Hohlsäule innerhalb des Schwimmkörpers (110) ausgebildet ist.

11. Schwimmkörper nach einem der Ansprüche 8 bis 10, **dadurch gekennzeichnet,** daß der Drehblock (120) auf der Verankerungssäule (122) taumelnd gelagert ist.

12. Schwimmkörper nach Anspruch 11, **dadurch gekennzeichnet,** daß der Drehblock (120) auf der Verankerungssäule (122) mittels mindestens zweier Kränze von elastischen Lagerkörpern (123) gelagert ist.

13. Schwimmkörper nach Anspruch 12, **dadurch gekennzeichnet,** daß die Lagerkörper (123) als elastische Rollen oder Kugeln ausgebildet sind.

14. Schwimmkörper nach einem der Ansprüche 1 bis 13, **dadurch gekennzeichnet,** daß in kreisförmiger Anordnung um die Drehachse auf dem Seeboden eine Auflagerung (146) für den Schwimmkörper (110) vorgesehen ist, welche den Schwimmkörper (110) bei Absenkung noch in betriebsfähiger Stellung trägt.

15. Schwimmkörper nach einem der Ansprüche 1 bis 14, **dadurch gekennzeichnet,** daß der Schwimmkörper (110) mit Flutkammern (140) ausgerüstet ist.

16. Schwimmkörper nach einem der Ansprüche 14 oder 15, **dadurch gekennzeichnet,** daß die Auflagerung (146) von einer Bodenplatte (144) ausgeht, welche ein Fundament der Verankerungssäule (122) bildet.

17. Schwimmkörper, insbesondere nach einem der Ansprüche 1 bis 16, **dadurch gekennzeichnet,** daß das in einer die Drehachse enthaltenden, vertikalen Schnittebene durch den Schwimmkörper (110) betrachtete Profil des Schwimmkörpers (110) in Höhe der Wasserlinie (111) eingezogen ist (bei 113).

18. Schwimmkörper nach einem der Ansprüche 1 bis 17, **dadurch gekennzeichnet,** daß er unterhalb der Wasserlinie mit befensterten, submarinen Aussichtsräumen (142) ausgerüstet ist.

# Fig.1

# Fig.2

# Fig.3

# Fig.4

a) — 16

b)

c)

d)

e)

f)

g)

h)

**Fig.5**

**Fig.6**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-2 629 787 (G. HEID) <br><br> * Ansprüche 1,3,16; Seite 7, Zeilen 23-36; Figuren 2,4,9 * | 1,4,7, 18 | B 63 B 35/44 |
| A | EP-A-0 179 260 (LIEBHERR WERK) <br> * Seite 2, Zeile 13 - Seite 3, Zeile 4; Seite 5, Zeilen 12-37; Figuren 2,3 * | 1 | |
| | | | RECHERCHIERTE SACHGEBIETE (Int. Cl.4) <br><br> B 63 B <br> B 63 C <br> E 02 F <br> E 04 F |

Der vorliegende Recherchenbericht wurde für alle Patentansprüche erstellt.

| Recherchenort | Abschlußdatum der Recherche | Prüfer |
|---|---|---|
| DEN HAAG | 21-10-1987 | VURRO,L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82